# EUROPEAN PATENT APPLICATION

(11) **EP 1 280 251 A1**
(43) Date of publication of application: **29.01.2003**
(21) Application number: 01401988.9
(22) Date of filing: 24.07.2001
(51) Int. Cl.: H02J 7/00

(54) **Battery discharger**

(71) Applicant: Thomson Licensing S.A., 92100 Boulogne-Billancourt (FR)
(72) Inventor: Koyama, Hirofumi, Higashimatsuyama, Saitama 355-0055 (JP)
(74) Representative: Ruellan-Lemonnier, Brigitte

(57) **Abstract**

The invention relates to a battery discharger comprising a controlled switch (46) which is conductive for discharging a battery when the voltage of this battery is greater than a first reference voltage (Vr1). The controlled switch is periodically opened and closed due to the fact that the voltage representing the battery voltage which is used to control the switch, has a greater value when the switch is "off" than when the switch is "on". At least a circuit element (44) is provided in order to extend the on period of the switch (46) when the voltage representing the voltage battery is higher than the first reference voltage (Vr1).

## Description

The invention relates to a battery discharger.

It is known that a Ni-Cd rechargeable battery, if charged repeatedly when not enough discharged, cannot reach its full capacity. In order to avoid this drawback, the battery must be discharged at least once before its charge.

It is known also that Ni-MH batteries do not work under optimum conditions if they are not used during a period of approximately two months or longer. In order to avoid this drawback, it is necessary to submit such batteries to two or three charge-discharge cycles.

More generally in order to operate such batteries at optimum conditions, more particularly to extend the life time and to increase the energy stored in the battery between two charges, they must be periodically discharged. This problem is particularly important to solve especially for portable devices such as CD players, cameras, camcorders, MD recorders, portable telephones, etc. because those devices generally do not contain any discharge function.

The object of the invention is to provide a battery discharger which works safely and rapidly and which may be manufactured at low costs.

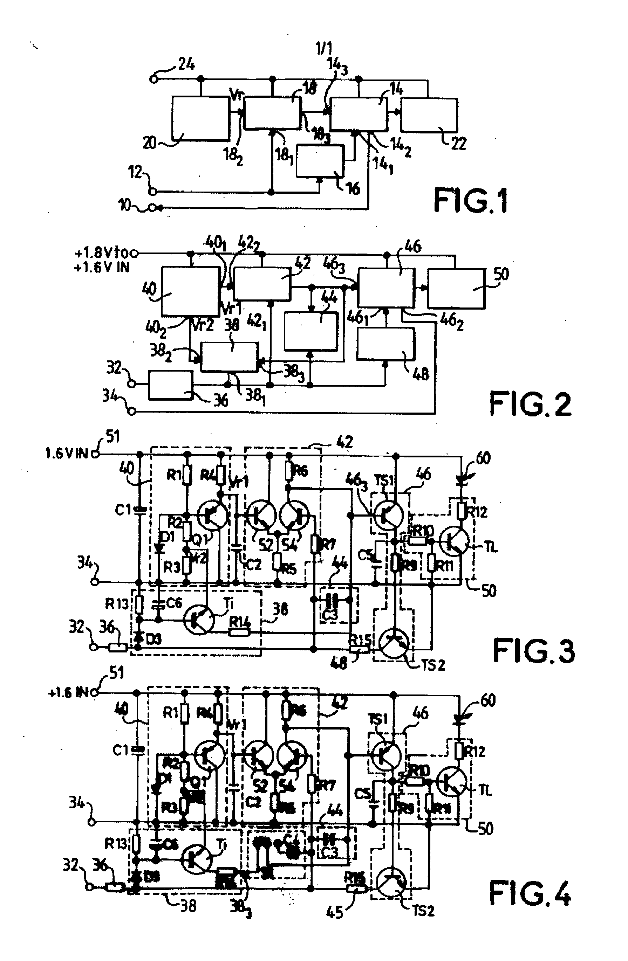

In order to better understand the improvement provided by the invention a conventional battery discharger will be described with figure 1.

This known battery discharger has two inputs for the battery, i.e. a ground input 10 and a voltage input 12. The voltage input 12 is connected to the first terminal 14₁ of a switch 14 through a current limiter 16. The terminal 12 is connected to the first input 18₁ of a voltage comparator 18 having a second input 18₂ receiving a signal Vr which is a reference voltage provided by a reference voltage generator 20.

The second terminal 14₂ of the switch is connected to the ground terminal 10.

The output 18₃ of the voltage comparator provides a signal which is applied on a control input 14₃ of the switch 14.

A LED (Light Emitting Diode) drive circuit 22 receives a current representative of the current in the switch 14 in order to provide a signal indicating whether the discharge is in operation or not.

Generally the reference voltage generator 20, the comparator 18 and the switch 14, which comprise different components such as transistors, as well as the LED drive current 22 are powered by an external voltage supply through a terminal 24.

It has been observed that the contact resistance between the terminals of the battery and the terminals 12 and 10 increases the discharge time because this resistance generates a periodic interruption, at a high frequency, of the discharging operation with a high intensity of discharge current. In fact when a battery is in course of discharge, the contact resistance generates a voltage drop during the discharge process and the consequence of this voltage drop is that the voltage at the input 18₁ of comparator 18 becomes lower than Vr and, therefore, the switch 14 is opened. But when the switch 14 is opened the current through the contact resistance is null and, consequently, the voltage on the input 18₁ increases and becomes greater than Vr. It results that the switch 14 closes and the phenomenon is repeated in a cyclic manner at a high frequency. This oscillation increases the discharge time.

The battery discharger according to the invention reduces the discharge time.

This battery discharger comprises at least a circuit element, such as a capacitor, which extends the conduction of the discharge switch a given time before the voltage representing the battery voltage becomes lower than a reference voltage.

In other words the battery discharger of the invention has means for controlling the duty cycle of the oscillation which may appear during the discharge.

In an embodiment the battery discharger comprises at least a second circuit element, such as a resistor, for controlling the frequency of the oscillation which may appear during the discharge. This second circuit element may be a resistor in series with the battery. With this circuit element it is possible to obtain a frequency of the oscillation which is lower than in the conventional battery dischargers and, therefore, allows simpler and cheaper circuitry.

According to another of its aspects the invention eliminates an other drawback of the conventional battery discharger which is the following :

When the battery voltage, applied on the input 18₁ of the comparator 18, is higher than the reference voltage Vr, the comparator 18 provides a control signal on the input 14₃ of the switch 14 in order that this switch be "ON" (conductive) and, therefore, the battery discharges trough this switch 14. Conversely when the voltage of the battery is lower than the reference value Vr the control signal applied on the input 14₃ controls the opening of the switch 14 and, therefore, the discharge is stopped.

But when the voltage of the battery applied on the input 18₁ is close to the reference voltage Vr, the voltage comparator provides a control signal which has an intermediate value between, on the one hand, the value of the signal which closes completely the switch and, on the other hand, the value of the signal which opens completely the switch 14. It results that the switch takes an intermediate position, i.e. a position for which the intensity of the discharge current is reduced. The consequence of this intermediate position of the switch is also an increase of the discharge time.

A solution to this problem would be to provide a more accurate voltage comparator, with practically no intermediate state, but this solution is too expensive for a device of this kind and requires a specific supply voltage for an accurate comparator.

Therefore the battery discharger includes - according to another aspect of the invention (which may be used in combination with the other aspects) - a current controller for decreasing the resistance of the discharge switch when a voltage representing the mean battery voltage is higher than a second reference voltage.

This feature allows also to decrease the discharge time.

The second reference voltage which controls the operation of the current controller may be different from the reference voltage which is used in cooperation with the first circuit element.

In brief, he invention concerns a battery discharger comprising a controlled switch which is conductive for discharging a battery when the voltage, of this battery is greater than a first reference voltage, wherein the controlled switch is periodically opened and closed due to the fact that the voltage representing the battery voltage which is used to control the switch, has a greater value when the switch is "off" than when the switch is "on", and wherein at least a circuit element is provided in order to extend the on period of the switch when a voltage representing the voltage battery is higher than the first reference voltage.

In an embodiment, the circuit element comprises at least a capacitor.

The battery discharger may comprise a second circuit element for controlling the frequency at which the switch is alternatively on and off. In that case, in an embodiment, the second circuit element is such that the frequency at which the switch is alternatively on and off decreases when the battery capacity decreases. According to an embodiment, a display is provided which blinks at a frequency representative of the frequency of the on and off switching.

In a further embodiment, the switch is such that its conduction state depends on the value of a control voltage, the switch being in an intermediate conduction state when the voltage representing the battery voltage is close to the first reference voltage, and the battery discharger comprises a current controller which puts the switch into a full conduction state when the voltage representing the battery voltage is greater than a second reference value. The current controller may comprise a rectifier. In that case, the battery discharge may comprise terminals for measuring the voltage provided by the rectifier in order to check the battery voltage.

The switch may comprise a transistor.

A voltage dropper may be provided for creating a voltage drop for generating said oscillation of the switch.

The invention relates also to the application of the battery discharger for the discharge of Ni-MH and/or Ni-Cd batteries.

The invention is also useful for the discharge of batteries of electronic portable devices.

Other features and advantages of the invention will appear with the description of certain of its embodiments, this description being made in connection with the following drawings wherein :
figure 1, already described, represents a conventional battery discharger,
figure 2 is a schematic representation of an embodiment of a discharger according to the invention,
figure 3 represents a detailed embodiment of the discharger represented on figure 2, and
figure 4 represents a discharger similar to the one shown on figure 3, but with a supplemental function.

In the battery discharger represented on figure 2 the battery to be discharged (not shown) is connected between terminals 32 and 34, terminal 34 being the ground terminal.

The voltage terminal 32 is connected to the input of a voltage dropper 36, which is, for instance, a resistor, and the output of this voltage dropper is connected to the first input 38₁ of a comparator or, current controller, 38 presenting a second input 38₂ on which is applied a reference voltage Vr₂ provided by the output 40₂ of a reference voltage generator 40.

The output of the voltage dropper 36 is also connected to the first input 42₁ of a second voltage comparator 42 comprising a second input 42₂ on which is applied a reference voltage Vr₁ provided by an output 40₁ of the reference voltage generator 40.

The output of the voltage dropper 36 is connected to a time constant element 44 which is also connected to the output of the voltage comparator 42.

Eventually the output of the voltage dropper 36 is connected to a terminal 46₁ of a switch circuit 46 through a current limiter 48 having the same function as the current limiter 16 of figure 1. The second terminal 46₂ of the switch circuit is connected to the ground terminal 34. The control terminal 46₃ of switch circuit 46 is connected to the output of voltage comparator 42 and, also, to the output 38₃ of current controller 38.

The circuit 50 is a LED drive and display circuit which is similar to the LED drive and display circuit 22 of figure 1.

The voltage dropper, or resistor, 36 has the function, together with the time constant element 44, to impose a given frequency to the oscillation described with reference to figure 1, i.e. the oscillation which is due to the fact that the voltage at the output of the voltage dropper or the voltage on terminal 32 (when there is a significant contact resistance), depends on the intensity of the current, i.e. depends on the state (conductive or not) of the switch circuit 46.

The voltage dropper, or resistor, 36 may be omitted when there is a significant contact resistance between the battery and terminals 32 and 34.

The voltage dropper 36, or simply the contact resistance (when the voltage dropper 36 is omitted), together with time constant element 44, determines the frequency of the oscillation which is proportional to the voltage of the battery.

In the embodiment represented on figure 3 the current controller 38 comprises a transistor Ti having its emitter connected to a terminal of a voltage divider including two resistors R2 and R3. These resistors are also components of the reference voltage generator 40.

The reference voltage generator 40 has an input connected to a terminal 51 on which is applied the DC power supply of the battery discharger. In this example this DC voltage supply is 1.6 V.

The generator 40 comprises, between the terminal 51 and the ground terminal 34, a PNP transistor Q1 having its emitter connected to terminal 51 trough a resistor R4 and its collector connected to the ground 34. The base of transistor Q1 is connected to terminal 51 trough a resistor R1, and to the ground through resistors R2 and R3 in series. The base of transistor Q1 is also connected to the ground 34 trough a diode D1.

The first reference voltage Vr₁ appears on the emitter of transistor Q1 and the second reference voltage Vr₂ appears at the connection terminal between resistors R2 and R3, i.e. on the emitter of transistor Ti of current controller 38

A capacitor C1 is connected at the input of the battery discharger, between terminals 51 and 34, in order to filter any high frequency noise which may originate from the power supply.

The voltage comparator 42 comprises two NPN transistors 52 and 54. The emitters of these transistors 52 and 54 are connected to the ground trough a resistor R5. The collector of transistor 52 is connected to terminal 51. The collector of transistor 54 is connected to supply terminal 51 through a resistor R6. The output of the comparator 42 appears at the collector of transistor 54. The base of this transistor 54 is connected to resistor 36 through a resistor R7. The terminal of resistor R7 which is connected to resistor 36 is connected to an input of time constant circuit 44. The latter comprises a capacitor C3 connected between resistor 36 and the control input 46₃ of switch circuit 46.

A capacitor C2 is provided between the base of transistor 52 and ground in order to protect this transistor 52 from noise.

The switch circuit 46 comprises a control transistor TS1 of the PNP type having its emitter connected to supply terminal 51 and its collector connected to the base of the main transistor TS2 of this circuit 46 through a resistor R9. The transistor TS2 is of the NPN type and has its emitter connected to the ground and its collector connected to resistor 36 trough an other resistor R15 which constitutes the current limiter 48.

A LED (light emitting diode) 60 has its anode connected to terminal 51 and its cathode connected to the collector of a transistor TL of the LED driver circuit 50 through a resistor R12. The base of this transistor TL is connected to the collector of transistor TS1 trough a resistor R10 and to ground through a resistor R11.

A capacitor C5, between ground and the collector of transistor TS1 of switch circuit 46, filters stray pulses which may appear when transistor TS1 changes its state from off to on.

The current controller 38 comprises a diode D3 having its anode connected to the terminal of resistor 36 opposed to terminal 32 and its cathode connected to ground 34 trough a resistor R13 ; this cathode is also connected to the base of transistor Ti and a capacitor C6 is connected between the base of transistor Ti and ground. The diode D3, capacitor C6 and resistor R13 of the current controller 38 convert the voltage provided by the battery during the oscillation period to a DC voltage provided at the base of transistor Ti.

The circuit represented on figure 3 operates as follows :

The voltage Vr₁ provided at the emitter of transistor Q1 of reference generator 40 is 1.25 V in this example. This value is determined by the anode voltage of diode D1 plus the junction voltage of base/emitter of transistor Q1.

The second reference voltage Vr₂ appearing between resistors R2 and R3 is determined by the value of these resistors and by the value of the forward voltage of D1. In this example this voltage Vr₂ is 0.23 V.

The discharger is off when the battery voltage is 1.05 V.

The voltage comparator 42 operates as follows : when the voltage at the base of transistor 54 is lower than Vr₁ (the voltage applied on the base of transistor 52) this transistor 54 is switched off. When the voltage on this base of transistor 54 is greater than Vr₁ the transistor 54 is switched on and the voltage of its collector drops. Consequently the voltage on the base of transistor TS1 of switch circuit 46 becomes lower than the voltage on the emitter minus the emitter/base voltage of this same transistor and, therefore, this transistor becomes conductive. As a result the voltage on the base of transistor TS2 (the main transistor of switch circuit 46) increases and this transistor TS2 becomes conductive. Therefore the battery discharges trough transistor TS2 when the battery voltage is practically superior to the reference voltage Vr₁.

Transistor TL of circuit 50 is "on" when transistor TS1 and TS2 of the switch circuit 46 are on (conductive). In that case the LED (Light Emitting Diode) 60 produces light signalling that the battery is under discharge.

Capacitor C3 of time constant circuit 44 increases the time of conduction of the switches TS1 and TS2 in the switch circuit 46 when the battery voltage is superior to the reference voltage Vr₁. In that case the voltage at the output of comparator 42, i.e. the voltage on the collector of transistor 54, decreases. Without the presence of capacitor C3 this would entail the immediate switching off of transistors TS1 and TS2. But capacitor C3 is loaded during the conduction of transistor TS1 and the conduction of Transistor 54. In fact capacitor C3 is charged during the conduction time of TS1 according to the following path : TS1 emitter and base, the capacitor C3, resistor R7, the base-emitter of transistor 54 and resistor R5.

The voltage of C3 increases during the charge and when the base voltage of TS1 reaches its switch off voltage (the voltage of emitter of TS1 minus emitter/base voltage of TS1) TS1 is switched off. Since the transistor Ti is taking the base current of TS1 at a mean battery voltage (as explained hereinafter) which is higher than Vr2 and as, also, transistor 54 is taking the base current of TS1 at a battery voltage which is higher than Vr1, the charging time of C3 is longer than its discharging time i.e. the conductive duration of TS1 and TS2 is longer.

Immediately after the switching off of transistor TS1, the voltage of base of TS1 is pushed up to the voltage of terminal 51 since the voltage drop at resistor 36 disappears, and the voltage on C3 is discharged according to the following paths : a first path comprising the collector-emitter of transistor 54 and R5, and a second path comprising R14, Ti and R3.

The charge and discharge of C3 is repeated until the battery voltage becomes smaller than Vr1.

Moreover the oscillation frequency is determined by the time constant of capacitor C3 and the equivalent resistance of transistor 54 and resistor R5 when the battery voltage is substantially higher than reference voltage Vr1; it is also determined by the equivalent resistance of transistor Ti and resistor R3.

The rectified voltage provided by diode D3, resistor R13 and capacitor C6 of current controller 38 is practically equal to the average battery voltage. When this rectified voltage, which appears on the base of transistor Ti, is greater than the reference voltage Vr₂ plus the junction voltage of base/emitter of transistor Ti, this transistor Ti is switched on. Therefore the voltage on collector of transistor Ti decreases. As a result the voltage on the base of transistor TS1 decreases, which entails the entire conduction of transistors TS1 and TS2.

This current controller contributes also to make the switch on duration of the oscillation duty ratio longer and to the decrease of the discharge time of the battery.

However when the average battery voltage becomes inferior to Vr1 the transistor Ti remains off and has no more the function of saturating (putting in the conductive state) transistors TS1 and TS2.

The value of resistor R14 is selected to limit the base current of TS1.

In an embodiment the oscillation stops only when the battery voltage is close to full discharge and the LED (Light Emitting Diode) is switched off.

Moreover the LED (Light Emitting Diode) may be used to signaling that the discharge process comes to an end and, therefore, the battery may be removed when LED (Light Emitting Diode) becomes dark.

With a proper value of capacitor C3, it is possible to select the frequencies of blinking of the diode in such a way that the blinking is not visible when the battery is fully charged and the blinking becomes visible as soon as the charge of the battery has decreased, and the blinking is at a very low frequency when the battery is nearly completely discharged.

The battery discharger which has been described is very simple. It does not need the use of complex IC_{S} such as microprocessors. The discharging time is reduced and the discharge and the voltage are controlled accurately.

This battery discharger can also be used for checking the residual battery capacity, for instance through the blinking frequency of a diode.

Figure 4 represents a battery charger with a checking function. In this embodiment, a switch S1 is provided in order to put the circuit either in a first position (shown on figure 4) which corresponds to the function of a battery discharger exactly like on figure 3, or in a second position where a capacitor C₄ is in parallel with capacitor C₃ and terminal 38₃ of the current controller 38 is disconnected.

When the current controller 38 is disconnected the discharge current from battery to be charged is minimized and also the oscillation frequency is brought to a much lower value because of an increased time constant by C4.

In an embodiment the frequency of the oscillation may be the maximum when the battery is fully charged and the minimum when it is discharged. For example this frequency will be selected at 43 Hz for full capacity 1.25 V, 17 Hz at 1.2 V, 5 Hz at 1.15 V and stop at 1.10 V.

The battery discharger may be combined with a conventional battery charger. Namely a conventional trickle battery charger (slow speed charger) supplies a voltage between 1.6V and 1.8V to a battery to be charged, and this voltage can be used for driving the discharger (including a battery checker) because the charger is not used before enough discharge by the discharger.

When the circuit shown on figure 3 or figure 4 is built on a printed circuit board with contacts for receiving a charging voltage on a battery charger and the contacts are connected to the terminals 51 and 34, a full and inexpensive charge/discharge combined system can be realized.

## Claims

1. A battery discharger comprising a controlled switch (46) which is conductive for discharging a battery when the voltage of this battery is greater than a first reference voltage (Vr1), wherein the controlled switch is periodically opened and closed due to the fact that the voltage representing the battery voltage which is used to control the switch, has a greater value when the switch is "off" than when the switch is "on", and wherein at least a circuit element (44) is provided in order to extend the on period of the switch (46) when the voltage representing the voltage battery is higher than the first reference voltage (Vr1).

2. A battery discharger according to claim 1 wherein the circuit element comprises at least a capacitor (C3).

3. A battery discharger according to claim 1 or 2 comprising second circuit elements (C3, 54, R5, Ti, R3) for controlling the frequency at which the switch is alternatively on and off.

4. A battery discharger according to claim 3 wherein the second circuit elements are such that the frequency at which the switch is alternatively on and off decreases when the battery capacity decreases.

5. A battery discharger according to claim 3 or 4 wherein a display (60) is provided which blinks at a frequency representative of the frequency of the switching on and off of the switch (46).

6. A battery discharger according to any of the previous claims wherein the switch (46) is such that its conduction state depends on the value of a control voltage, the switch being in an intermediate conduction state when the voltage representing the battery voltage is close to the first reference voltage (Vr1), said battery discharger comprising a current controller (38) which puts the switch (46) into a full conduction state when the voltage representing the battery voltage is greater than a second reference value(Vr2).

7. A battery discharger according to claim 6 wherein the current controller (38) comprises a rectifier.

8. A battery discharger according to claim 7 comprising terminals for measuring the voltage provided by the rectifier in order to check the battery voltage.

9. A battery discharger according to any of the previous claims wherein the switch comprises a transistor (TS2).

10. A battery discharger according to any of the previous claims comprising a voltage dropper (36) in order to create a voltage drop for generating said oscillation of the switch.

11. Application of the battery discharger according to any of the previous claims for the discharge of Ni-MH and/or Ni-Cd batteries.

12. Application of the battery discharger according to any of claims 1-10 to the discharge of batteries for electronic portable devices.
